# EUROPEAN PATENT APPLICATION

(11) **EP 4 477 711 A1**
(43) Date of publication of application: **18.12.2024**
(21) Application number: 23179156.7
(22) Date of filing: 14.06.2023
(51) Int. Cl.: C08L 67/02

(54) **FILLER REINFORCED POLYESTER COMPOSITIONS WITH IMPROVED SUSTAINABLE CONTENT, SURFACE AESTHETICS AND NMT BONDING STRENGTH**

(71) Applicant: SHPP Global Technologies B.V., 4612 PX Bergen op Zoom (NL)
(72) Inventor: Grieshaber, Sarah, Selkirk, 12158 (US); Gandhi, Kaushal, Mount Vernon, 47620 (US); Zhou, Bing, Mount Vernon, 47620 (US)
(74) Representative: Modiano, Gabriella Diana

(57) **Abstract**

A thermoplastic composition includes: from about 20 wt% to about 65 wt% of a resin component including polybutylene terephthalate (PBT), polycyclohexylenedimethylene terephthalate (PCT), polyethylene terephthalate (PET), or a combination thereof; from about 10 wt% to about 30 wt% of a polyestercarbonate copolymer including resorcinol units; from about 5 wt% to about 50 wt% of a glass fiber component including recycled round glass fiber; and from about 5 wt% to about 10 wt% of at least one additive component. The composition has improved nano molding technology (NMT) bonding strength as compared to a comparative composition including flat glass fibers instead of the recycled round glass fibers.

## Description

### FIELD OF THE DISCLOSURE

The present disclosure relates to thermoplastic compositions having improved nano molding technology (NMT) bonding strength, and in particular to NMT compositions including a glass fiber component including recycled round glass fiber.

### BACKGROUND OF THE DISCLOSURE

Customers are demanding materials with increased recycle content and decreased carbon footprint, especially in consumer electronics applications. However, many recycled materials often have detrimental effects on mechanical properties, color, or other properties such as nano molding technology (NMT) bonding strength (plastic-metal adhesion). The surface appearance of parts after the computer numerical control (CNC) milling step of the NMT process has also been an issue for customers. This process exposes the glass fibers, creating a lighter appearance. The surface appearance issue can be addressed by polishing or laser ablation. However, each of these steps are additional processes that add time and cost to the manufacturing process.

These and other shortcomings are addressed by aspects of the present disclosure.

### SUMMARY

Aspects of the disclosure relate to a thermoplastic composition including: from about 20 wt% to about 65 wt% of a resin component including polybutylene terephthalate (PBT), polycyclohexylenedimethylene terephthalate (PCT), polyethylene terephthalate (PET), or a combination thereof; from about 10 wt% to about 30 wt% of a polyestercarbonate copolymer including resorcinol units; from about 5 wt% to about 50 wt% of a glass fiber component including recycled round glass fiber; and from about 5 wt% to about 10 wt% of at least one additive component. The composition has improved nano molding technology (NMT) bonding strength as compared to a comparative composition including flat glass fibers instead of the recycled round glass fibers.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIGS. 1A-1D are optical microscopy images of the milled areas of samples prepared from compositions C1, Ex1, C2 and Ex2, respectively.
FIGS. 2A and 2B are optical microscopy images of the interface between the milled and unmilled areas of samples prepared from composition C1 (FIG. 2A) and Ex2 (FIG. 2B).

### DETAILED DESCRIPTION

There is a strong customer demand for materials with higher sustainable content, especially for consumer electronics applications including nano molding technology (NMT). There is also a need for improved surface appearance of filled NMT grades after secondary operations such as CNC milling/machining. The present disclosure relates to compositions based on both recycled resin and recycled filler building blocks for maximum sustainable content, with improved surface appearance due to the geometry and amount of the filler while maintaining NMT bonding strength and other physical properties.

This disclosure shows that the surface aesthetics can be improved by changing the geometry of the glass fibers or by reducing the amount of glass fibers, and the sustainable content can be improved by using a recycled glass fiber that does not result in loss of NMT bonding strength, color capability or significant loss of other properties.

In particular the present disclosure describes compositions for NMT applications including 100% pre-consumer recycled glass fibers with a round cross-section as an alternative to flat cross-section (low warp) glass fibers with no recycle content. The recycled round glass fibers were of interest for the increase in total sustainable content of the composition. However, they also unexpectedly improved the surface appearance of the parts after milling, and slightly improved the NMT bonding strength compared to flat glass fibers. The use of recycled resins or fillers can often lead to degradation of properties and color, but as demonstrated in the present disclosure the properties were maintained compared to the virgin material with only slight differences due to the geometry of the glass fibers.

Compositions according to the present disclosure could reduce the need for additional processing steps (e.g., polishing and laser ablation). The sustainable filler also adds the benefit of reduced carbon footprint with comparable or better NMT bonding strength and mechanical property performance.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a resin component" includes mixtures of two or more resin components.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyestercarbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to a thermoplastic composition including: from about 20 wt% to about 65 wt% of a resin component including polybutylene terephthalate (PBT), polycyclohexylenedimethylene terephthalate (PCT), polyethylene terephthalate (PET), or a combination thereof; from about 10 wt% to about 30 wt% of a polyestercarbonate copolymer including resorcinol units; from about 5 wt% to about 50 wt% of a glass fiber component including recycled round glass fiber; and from about 5 wt% to about 10 wt% of at least one additive component. The composition has improved nano molding technology (NMT) bonding strength as compared to a comparative composition including flat glass fibers instead of the recycled round glass fibers, wherein NMT bonding strength is evaluated according to a modified ISO 19095 procedure.

As used herein, "polybutylene terephthalate" can be used interchangeably with poly(1,4-butylene terephthalate).

As used herein, "polyethylene terephthalate" can be used interchangeably with poly(ethyl benzene-1,4-dicarboxylate). As with polybutylene terephthalate, polyethylene terephthalate is a type of polyester.

As used herein, polycyclohexylenedimethylene terephthalate (PCT) is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA). In a particular aspect the polyester component includes PBT, PET, or a combination thereof.

The resin component including polybutylene terephthalate (PBT), polycyclohexylenedimethylene terephthalate (PCT), polyethylene terephthalate (PET), or a combination thereof may including virgin resin or recycled resin.

In some aspects the resin component includes chemically recycled polymer. An exemplary chemically recycled polymer is chemically recycled PBT. Chemically recycled PBT is a copolymer containing 1-20 % comonomers, like ethylene glycol, isophthalic acid (IPA) and diethylene glycol (DEG). In specific aspects, the chemically recycled PBT, named as iQ PBT, is derived from a chemical upcycled (or post-consumer recycled) PET. Compositions formed from iQ PBT provide an environmentally friendly advantage that provide desirable elastic modulus, stress at break, and elongation at break.

Commercial examples of an upcycled PBT include those available under the trade name ELCRIN^{™} iQ Resin, manufactured by SABIC^{™}. The PBT may be derived from the poly(ethylene terephthalate) component by any method that involves depolymerization of the poly(ethylene terephthalate) component and polymerization of the depolymerized poly(ethylene terephthalate) component with 1,4 butanediol to provide the PET-derived PBT. For example, the PET-derived poly(butylene terephthalate) component may be made by a process that involves depolymerizing a poly(ethylene terephthalate) and/or a poly(ethylene terephthalate) copolymer, with a 1,4 butanediol component at a temperature from 180 °C to 230 °C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4 butanediol, ethylene glycol, or a combination thereof; and agitating the molten mixture at sub-atmospheric pressure and increasing the temperature of the molten mixture to an elevated temperature under conditions sufficient to form a PET-derived PBT containing at least one residue derived from the poly(ethylene terephthalate) component.

In certain aspects the resin component includes at least two chemically recycled PBT components, such as but not limited to a chemically recycled PBT having a low intrinsic viscosity (IV) of from 0.63-0.68 (e.g., iQ 195B) and a second chemically recycled PBT having a high intrinsic viscosity (IV) of from 1.15-1.22 (iQ 315B).

The thermoplastic composition includes from about 20 wt% to about 65 wt% of the resin component. In some aspects the composition includes at least 20 wt%, 25 wt%, or at least 30 wt% or at least 40 wt%, or at least 45 wt%, or less than 65 wt%, or less than 60 wt%, or less than 55 wt%, of the resin component.

The copolyestercarbonate copolymer may include ester units of the formula 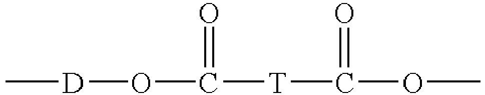 wherein D is a divalent group derived from a dihydroxy compound, and may be, for example, a C₂₋₃₀ alkylene group, a C₃₋₃₀ alicyclic group, a C₆₋₃₀ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a C₂₋₃₀ alkylene group, a C₆₋₃₀ alicyclic group, a C₆₋₃₀ alkyl aromatic group, or a C₆₋₃₀ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a C₂₋₆ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula 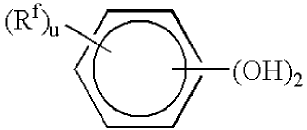 wherein each R^{f} is independently C₁₋₁₂ alkyl, or halogen, and u is 0 to 4. It will be understood that R^{f} is hydrogen when u is 0. Typically, the halogen can be chlorine or bromine. In an aspect, compounds in which the -OH groups are substituted meta to one another, and wherein R^{f} and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units, wherein the molar ratio of isophthalate-resorcinol ester units to terephthalate-resorcinol ester units is 99:1 to 1:99, or 95:5 to 5:95, or 90:10 to 10:90, or 80:20 to 20:80. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below: 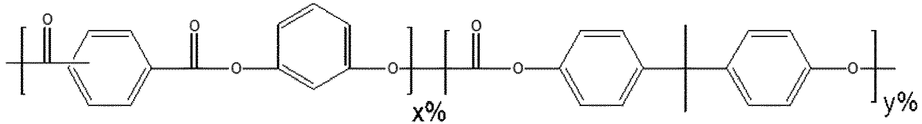 wherein x is the mole % of the ITR ester block and y is the mole % of the polycarbonate block. An exemplary copolyestercarbonate copolymer is SLX 90/10 resin, available from SABIC. SLX 90/10 includes 90 mole % ITR block and 10 mole % PC block.

In yet further aspects the copolyestercarbonate copolymer has a ratio of ITR ester units to polycarbonate monomer units of from 20:80 to 95:5, or from 85:15 to 95:5, or from 88:12 to 92:8, or about 90:10.

The composition includes from about 10 wt% to about 30 wt% of the polyestercarbonate copolymer including resorcinol units. In some aspects the composition includes at least 10 wt%, or at least 11 wt%, or at least 12 wt%, or at least 13 wt%, or at least 14 wt%, or less than 30 wt%, or less than 25 wt%, or less than 24 wt%, or less than 23 wt%, or less than 22 wt%, or less than 21 wt%, or less than 20 wt%, or less than 19 wt%, or less than 18 wt%, or less than 17 wt%, of the polyestercarbonate copolymer including resorcinol units.

The composition includes from about 5 wt% to about 50 wt% of the glass fiber component including recycled round glass fiber. In certain aspects the composition includes at least 5 wt%, or at least 10 wt%, or at least 15 wt%, or at least 16 wt%, or at least 17 wt%, or at least 18 wt%, or at least 19 wt%, or at least 20 wt%, or less than 50 wt%, or less than 45 wt%, or less than 40 wt%, or less than 35 wt%, or less than 34 wt%, or less than 33 wt%, or less than 32 wt%, or less than 31 wt%, or less than 30 wt%, of the glass fiber component. The recycled round glass fiber may in some aspects be a pre-consumer (also known as post-industrial) recycled glass fiber. Such glass fibers are formed from a chemical recycling type process, so the properties are not degraded as they would be by a mechanical recycling process.

In some aspects wherein the recycled round glass fiber has a length of less than 8 millimeters (mm) and a diameter of less than 15 micron (µm). In particular aspects the recycled round glass fiber has a length of less than 7 mm, or less than 6 mm, or less than 5 mm, or about 4 mm. In further aspects the recycled round glass fiber has a length of less than 14 µm, or less than 13 µm, or less than 12 µm, or less than 11 µm, or about 10 µm.

The additive component may include, but is not limited to, an impact modifier, a mold release agent, a quenching agent, UV stabilizer, impact modifier, heat stabilizer, antioxidant, colorant, a transesterification inhibitor, an acid scavenger, an anti-drip agent, an antistatic agent, a chain extender, a flow promoter, a lubricant, a plasticizer, a flame retardant, a UV reflecting additive, a blowing agent, a reinforcing agent, or a combination thereof. In particular aspects the additive component includes an impact modifier, a mold release agent, a quenching agent, UV stabilizer, impact modifier, heat stabilizer, antioxidant, colorant, or a combination thereof.

Metal bonding strength is used to evaluate NMT performance. In NMT processes plastic resin is injected onto a metal surface that is treated by a special chemical solution. This NMT process is developed from the integration technology of metal and plastics. It allows for manufacture of certain parts of consumer products and replaces the traditional insert molding or die casting process.

In certain aspects the composition has improved nano molding technology (NMT) bonding strength as compared to a comparative composition including flat glass fibers instead of the recycled round glass fibers, wherein NMT bonding strength is evaluated according to a modified ISO 19095 procedure. The modified ISO 19095 procedure is described in PCT publication WO2015/200272, the disclosure of which is incorporated herein by this reference in its entirety. ISO 19095 is a standard for "Evaluation of the adhesion interface performance in plastic-metal assemblies," which is considered the bar test widely accepted by the industry. Two types of bar parts are used, including a lap joint and a butt joint. The modified ISO 19095 procedure includes the following steps:
i) Pre-treatment on the metal parts to create nano- and micro- sized holes on metal surface by a chemical etching process;
ii) Within an effective treatment timeframe, plastic is injection-molded onto the pre-treated aluminum insets;
iii) Bonding force is measured by recording the force when the molded parts are pulled until the breaking point on a standard tensile test machine; and
iv) Bonding strength is calculated (e.g., to MPa unit) accordingly by using bonding force divided by bonding area.
The metal may be pre-treated with a metal surface treatment, which may include one of two major processes: T (Taiseiplas)-treatment and TRI (Technology Rising from IWATE)-treatment. These methods were developed by different companies in Japan. Comparing these two treatment methods, TRI typically provides higher strength resulting from both physical anchoring of plastics in metal nano holes and the chemical reaction between the metal surface chemical film and plastics. In contrast, T treatment primarily relies on physical anchoring.

In some aspects the composition has improved surface appearance as compared to a comparative composition including flat glass fibers instead of the recycled round glass fibers. Improved surface appearance may be evaluated as described herein.

The composition may in some aspects include at least 20 wt% recycled content, or in further aspects at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at least 75 wt% recycled content.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is a component of a consumer electronics application. In specific aspects the article is an internal or external component of a mobile phone, tablet, computer, watch or an accessory thereof.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
from about 20 wt% to about 65 wt% of a resin component comprising polybutylene terephthalate (PBT), polycyclohexylenedimethylene terephthalate (PCT), polyethylene terephthalate (PET), or a combination thereof;
from about 10 wt% to about 30 wt% of a polyestercarbonate copolymer comprising resorcinol units;
from about 5 wt% to about 50 wt% of a glass fiber component comprising recycled round glass fiber; and
from about 5 wt% to about 10 wt% of at least one additive component,
wherein the composition has improved nano molding technology (NMT) bonding strength as compared to a comparative composition including flat glass fibers instead of the recycled round glass fibers, wherein NMT bonding strength is evaluated according to a modified ISO 19095 procedure.

Aspect 2. The thermoplastic composition according to Aspect 1, wherein the composition has improved surface appearance as compared to a comparative composition including flat glass fibers instead of the recycled round glass fibers.

Aspect 3. The thermoplastic composition according to Aspect 1 or 2, wherein the resin component comprises a chemically recycled polymer.

Aspect 4. The thermoplastic composition according to Aspect 3, wherein the chemically recycled polymer comprises at least two chemically recycled PBT polymers.

Aspect 5. The thermoplastic composition according to any of Aspects 1 to 4, wherein the polyestercarbonate copolymer comprising resorcinol units comprises isophthalate-terephthalate-resorcinol (ITR) ester units.

Aspect 6. The thermoplastic composition according to any of Aspects 1 to 5, wherein the composition comprises from about 20 wt% to about 30 wt% of the glass fiber component.

Aspect 7. The thermoplastic composition according to any of Aspects 1 to 6, wherein the recycled round glass fiber has a length of less than 8 millimeters (mm) and a diameter of less than 15 micron (µm).

Aspect 8. The thermoplastic composition according to any of Aspects 1 to 7, wherein the composition is suitable for use in NMT bonding applications.

Aspect 9. The thermoplastic composition according to any of Aspects 1 to 8, wherein the additive component comprises an impact modifier, a mold release agent, a quenching agent, UV stabilizer, impact modifier, heat stabilizer, antioxidant, colorant, a transesterification inhibitor, an acid scavenger, an anti-drip agent, an antistatic agent, a chain extender, a flow promoter, a lubricant, a plasticizer, a flame retardant, a UV reflecting additive, a blowing agent, a reinforcing agent, or a combination thereof.

Aspect 10. The thermoplastic composition according to any of Aspects 1 to 9, wherein the additive component comprises an impact modifier, a mold release agent, a quenching agent, UV stabilizer, impact modifier, heat stabilizer, antioxidant, colorant, or a combination thereof.

Aspect 11. The thermoplastic composition according to any of Aspects 1 to 10, wherein the composition comprises at least 40 wt% recycled content.

Aspect 12. The thermoplastic composition according to any of Aspects 1 to 11, wherein the composition comprises:
from about 40 wt% to about 55 wt% of the resin component;
from about 10 wt% to about 20 wt% of the polyestercarbonate copolymer;
from about 20 wt% to about 35 wt% of the glass fiber component; and
from about 5 wt% to about 10 wt% of the at least one additive component.

Aspect 13. An article comprising the thermoplastic composition according to any of Aspects 1 to 12.

Aspect 14. The article according to Aspect 13, wherein the article is a component of a consumer electronics application.

Aspect 15. The article according to Aspect 13, wherein the article is an internal or external component of a mobile phone, tablet, computer, watch or an accessory thereof.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

PBT-based glass-filled compositions were prepared and tested in accordance with Tables 1A and 1B:

**Table 1A - Comparative and Example Compositions**

| **Component (wt%)** | | **C1** | **Ex1** | **C2** | **Ex2** |
|---|---|---|---|---|---|
| PBT, Low IV, iQ 195B | | 36.9 | 36.9 | 42.93 | 42.93 |
| PBT, High IV, iQ 315B | | 9.92 | 9.92 | 11.54 | 11.54 |
| SLX 90/10, ITR polyestercarbonate copolymer including resorcinol units | | 14.38 | 14.38 | 16.73 | 16.73 |
| Flat glass fiber | | 30 | | 20 | |
| Recycled round glass fiber | | | 30 | | 20 |
| Pentaerythritol tetrastearate (PETS) (mold release) | | 0.2 | 0.2 | 0.2 | 0.2 |
| Mono-zinc phosphate (MZP) (Quenching agent) | | 0.05 | 0.05 | 0.05 | 0.05 |
| Benzotriazole (UV stabilizer) | | 0.25 | 0.25 | 0.25 | 0.25 |
| Polyethylene-ethylacrylate copolymer (Impact modifier) | | 2 | 2 | 2 | 2 |
| Polybutylene tere/iso phthalate-co-polyoxybutylene copolymer (Impact modifier) | | 2.5 | 2.5 | 2.5 | 2.5 |
| Ethylene-methylacrylate-glycidylmethacrylate copolymer (Impact modifier) | | 3 | 3 | 3 | 3 |
| Irgafos 168, Tris(2,4-di-t-butylphenyl)phosphite (Heat stabilizer) | | 0.2 | 0.2 | 0.2 | 0.2 |
| Irganox 1010 (Antioxidant) | | 0.1 | 0.1 | 0.1 | 0.1 |
| Carbon Black (Colorant) | | 0.5 | 0.5 | 0.5 | 0.5 |

**Table 1B - Properties of Table 1A Compositions**

| **Properties** | **Units** | **C1** | **Ex1** | **C2** | **Ex2** |
|---|---|---|---|---|---|
| MVR (250 °C, 5 kg), ASTM D1238 | cm³/ 10 min | 13 | 14 | 33 | 32 |
| Density, ASTM D792 | g/cm³ | 1.48 | 1.51 | 1.43 | 1.40 |
| Notched Izod Impact strength (NII), at 23 °C, ASTM D256 | J/m | 145 | 109 | 109 | 80 |
| Unnotched Izod impact strength (UNII), 23 °C, ASTM D256, ASTM D4812 | J/m | 748 | 770 | 693 | 682 |
| Multiaxial impact, total energy, ASTM D3763 | J | 22 | 19 | 18 | 9 |
| Tensile modulus, Type I, 5 mm/min, ASTM D638 | MPa | 8976 | 9350 | 6860 | 6807 |
| Tensile strength at break, ASTM D638 | MPa | 118 | 118 | 102 | 106 |
| Tensile elongation at break, ASTM D638 | % | 2.4 | 2.4 | 2.7 | 2.7 |
| Flexural modulus, ASTM D790 | MPa | 7370 | 7810 | 5640 | 5950 |
| Flexural strength at break, ASTM D790 | MPa | 169 | 172 | 149 | 154 |
| Heat distortion temperature (HDT), 0.45 MPa, ASTM D648 | °C | 211 | 211 | 211 | 211 |
| HDT, 1.82 MPa, ASTM D648 | °C | 156 | 142 | 171 | 162 |
| CTE -40 to 40C, flow, ASTM E831 | µm/ (m-°C) | 34 | 30 | 41 | 40 |
| CTE -40 to 40C, xflow, ASTM E831 | µm/ (m-°C) | 59 | 72 | 79 | 79 |
| NMT Bonding strength - T-type (shear) | MPa | 22 | 22 | 31 | 35 |
| NMT Bonding strength - TRI-type (butt) | MPa | 26 | 34 | 33 | 37 |

Comparative composition C1 included 30 wt% flat glass fiber. It had slightly higher impact strength and tensile and flexural modulus compared to the round recycled glass fiber at 30 wt% (Ex1). However, composition Ex1 had an unexpected improvement in NMT bonding strength compared to comparative composition C1 with the TRI metal treatment. This could be partially due to differences in sizing chemistry on the glass fibers. The surface appearance after milling was also unexpectedly improved, as demonstrated below.

Glass fiber loading was reduced to 20 wt% as an attempt to further improve the surface appearance with flat or round recycled glass fiber (C2 and Ex2, respectively). As expected, mechanical properties including tensile, flexural, and notched Izod impact were significantly reduced and flow was increased at the lower glass loading. However, the NMT bonding strength was improved compared to the 30 wt% glass filled samples with both types of surface treatment, and recycled round glass fiber (Ex2) again showed higher bonding strength compared to flat glass fiber (C2). Although it was anticipated that the 30 wt% glass-filled samples might have higher bonding strength due to higher modulus and lower shrinkage than the 20 wt% glass filled samples, the decrease in amount of glass fiber and higher flow of the 20 wt% glass filled samples may help to fill the nano-sized holes in the metal more effectively and lead to improved NMT adhesion.

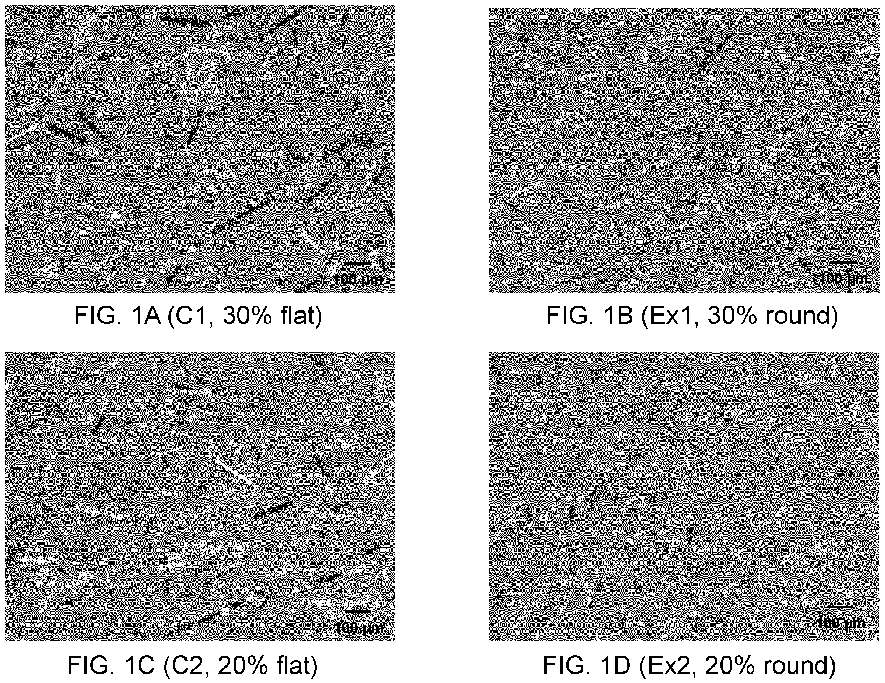

To simulate the milling process that these materials will be required to withstand for NMT applications, color chips were molded and a section of the color chip was milled to observe the effects on the surface appearance of the part. Optical microscopy images of the milled areas of C1 (30% flat glass fiber) and Ex1 (30% round recycled glass fiber) are shown in FIGS. 1A and 1B. Optical microscopy images of the milled areas of C2 (20% flat glass fiber) and Ex2 (20% round recycled glass fiber) are shown in FIGS. 1C and 1D. After milling there appears to be a larger exposed area of the flat glass fibers in C1 (FIG. 1A) and C2 (FIG. 1C) compared to the round glass fibers in Ex1 (FIG. 1B) and Ex2 (FIG. 1D). The round glass fibers have more area that appears to be hidden under the resin surface, which will lead to less reflection of light on the surface and an improved surface appearance. This may be due to the difference in surface area of the glass fibers as well as a difference in sizing chemistry on the glass fibers which can influence compatibility with the resin.

The exposed surface area was quantified by microscopy, and the results are shown in Table 2. There is a significant difference in the exposed area in the 20% GF samples. The exposed area of the 30% GF samples was not significantly different, however the difference was noticeable by eye when viewing the parts. In addition, the surface appearance of compositions C2 and Ex2 with 20% glass fibers was significantly improved compared to the 30 wt% samples due to the decrease in the amount of glass fiber available to come to the surface of the part, which will negatively affect the appearance.

**Table 2- Quantification of glass fiber exposed area % by microscopy**

| **Sample** | **Description** | **Area %** |
|---|---|---|
| C1 | 20% flat glass | 12.16 |
| Ex1 | 20% round glass | 10.58 |
| C2 | 30% flat glass | 15.03 |
| Ex2 | 30% round glass | 15.40 |

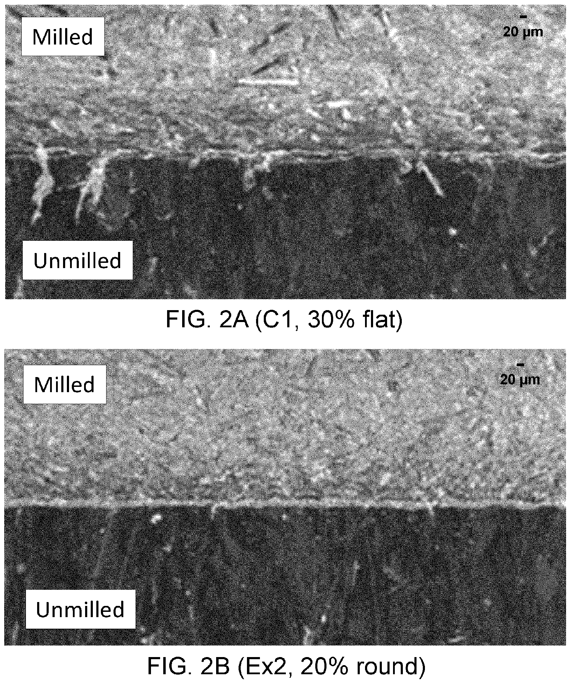

FIGS. 2A and 2B show optical microscopy images of the interface between the milled and unmilled areas of the parts. The boundary is much cleaner and more intact for composition Ex2 (FIG. 2B) with round glass fiber compared to comparative composition C1 (FIG. 2A) with flat glass fiber; this can also influence the surface appearance.

The specific process for evaluating visual appearance is described below:
(i) Color chips were milled on an ACRA LCM-50 milling machine customized to mill plastic parts. The cutter was 2.5 inches. The feed rate for the plastic chip was 10 inches/min with a cutter speed of 1350 RPM. The plastic color chip was inserted in a holder. The cutter was lowered to cut the bottom half of the color chip. Typically, 50 to 125 microns of a smooth resin rich surface is removed via this milling procedure. Removal of the resin rich surface reveals a rough surface with exposed glass fiber.
(ii) Optical microscopy micrographs of the exposed surface were captured with a Keyence VHX-5000. The instrument was equipped with a super luminosity LED light source, motorized XYZ stage, VH zoom lens 20x-200x, VHX-5100 camera unit with 1/1.8 type 1.95 million pixel CMOS image sensor. The images were collected and formed from reflected light. Magnification: 200X.
(iii) Visual observation of the micrographs reveal a higher amount of flat glass fiber which in turn reflected more light, and appeared aesthetically less pleasing. A higher number of exposed glass fiber resulted in a worse visual rating. The round glass fiber samples have less exposed glass fiber, less reflection and thus were aesthetically more pleasing.

It is very difficult to mill an unfilled resin so it cannot be used as a control, but it is possible to quantify the number of fibers visible in the optical microscopy image at 200x magnification. The exposed fibers counted are those that appear black in the images. The following rating system may be used:

| **Number of fibers visible** | **Rating** |
|---|---|
| < 10 | 4 |
| 10-20 | 3 |
| 20-30 | 2 |
| 30+ | 1 |

According to this rating system, the flat glass samples C1 and C2 had a rating of "1" and the round glass samples Ex1 and Ex2 had a rating of "4". Accordingly, in some aspects the composition has an improved surface appearance as compared to a comparative composition including flat glass fibers instead of the recycled round glass fibers, wherein improved surface appearance is characterized as having a visual surface rating improvement of at least 2 categories, or 3 categories, as compared to the comparative composition, as evaluated on a scale of 1 to 4. In further aspects the composition has a visual surface rating of at least 3, or at least 4, as evaluated as described herein.

Overall, the recycled round glass fibers have the benefit of a significant improvement in sustainable content (100% pre-consumer recycled) but unlike many other recycled materials, they have comparable mechanical performance to virgin glass fibers. The surface appearance after milling was unexpectedly improved with the recycled glass fibers with round geometry compared to standard flat geometry glass fibers that are used in many commercial NMT grades. The NMT bonding strength was also unexpectedly improved slightly by using round geometry recycled glass fibers and/or by decreasing the amount of glass fibers to 20%.

While the examples prepared and discussed herein were PBT-based, a higher heat polyester PCT (Polycyclohexylenedimethylene terephthalate) or polyethylene terephthalate (PET) could be used. NMT bonding strength is expected to decrease with PCT, but the effects on surface appearance are to be determined.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
from about 20 wt% to about 65 wt% of a resin component comprising polybutylene terephthalate (PBT), polycyclohexylenedimethylene terephthalate (PCT), polyethylene terephthalate (PET), or a combination thereof;
from about 10 wt% to about 30 wt% of a polyestercarbonate copolymer comprising resorcinol units;
from about 5 wt% to about 50 wt% of a glass fiber component comprising recycled round glass fiber; and
from about 5 wt% to about 10 wt% of at least one additive component,
wherein the composition has improved nano molding technology (NMT) bonding strength as compared to a comparative composition including flat glass fibers instead of the recycled round glass fibers, wherein NMT bonding strength is evaluated according to a modified ISO 19095 procedure.

2. The thermoplastic composition according to claim 1, wherein the composition has improved surface appearance as compared to a comparative composition including flat glass fibers instead of the recycled round glass fibers.

3. The thermoplastic composition according to claim 1 or 2, wherein the resin component comprises a chemically recycled polymer.

4. The thermoplastic composition according to claim 3, wherein the chemically recycled polymer comprises at least two chemically recycled PBT polymers.

5. The thermoplastic composition according to any of claims 1 to 4, wherein the polyestercarbonate copolymer comprising resorcinol units comprises isophthalate-terephthalate-resorcinol (ITR) ester units.

6. The thermoplastic composition according to any of claims 1 to 5, wherein the composition comprises from about 20 wt% to about 30 wt% of the glass fiber component.

7. The thermoplastic composition according to any of claims 1 to 6, wherein the recycled round glass fiber has a length of less than 8 millimeters (mm) and a diameter of less than 15 micron (µm).

8. The thermoplastic composition according to any of claims 1 to 7, wherein the composition is suitable for use in NMT bonding applications.

9. The thermoplastic composition according to any of claims 1 to 8, wherein the additive component comprises an impact modifier, a mold release agent, a quenching agent, UV stabilizer, impact modifier, heat stabilizer, antioxidant, colorant, a transesterification inhibitor, an acid scavenger, an anti-drip agent, an antistatic agent, a chain extender, a flow promoter, a lubricant, a plasticizer, a flame retardant, a UV reflecting additive, a blowing agent, a reinforcing agent, or a combination thereof.

10. The thermoplastic composition according to any of claims 1 to 9, wherein the additive component comprises an impact modifier, a mold release agent, a quenching agent, UV stabilizer, impact modifier, heat stabilizer, antioxidant, colorant, or a combination thereof.

11. The thermoplastic composition according to any of claims 1 to 10, wherein the composition comprises at least 40 wt% recycled content.

12. The thermoplastic composition according to any of claims 1 to 11, wherein the composition comprises:
from about 40 wt% to about 55 wt% of the resin component;
from about 10 wt% to about 20 wt% of the polyestercarbonate copolymer;
from about 20 wt% to about 35 wt% of the glass fiber component; and
from about 5 wt% to about 10 wt% of the at least one additive component.

13. An article comprising the thermoplastic composition according to any of claims 1 to 12.

14. The article according to claim 13, wherein the article is a component of a consumer electronics application.

15. The article according to claim 13, wherein the article is an internal or external component of a mobile phone, tablet, computer, watch or an accessory thereof.
